# EUROPEAN PATENT APPLICATION

(11) **EP 2 604 242 A2**
(43) Date of publication of application: **19.06.2013**
(21) Application number: 12196463.9
(22) Date of filing: 11.12.2012
(51) Int. Cl.: A61G 12/00, B62B 3/10

(54) **Modular trolley**

(30) Priority: 16.12.2011 GB 201121685
(71) Applicant: Roma Medical Aids Limited, Bridgend CF31 3TB (GB)
(72) Inventor: Pitt, John, Bridgend CF31 3TB (GB); Ratcliffe, John, Bridgend CF31 3TB (GB)
(74) Representative: Davies, Gregory Mark

(57) **Abstract**

A trolley (1a, 1b) is provided, comprising an elongate body having a base (2), a mouth (4) and at least two side members (5a, 5b) extending there between. The mouth is arranged and configured to carry a receptacle such as a waste bin or laundry bag. First (9) and second (10) connection means are provided on the same side of the trolley to facilitate connection of the trolley to a second trolley in a side-by-side formation. The invention is particularly suited for use with trolleys such as those used in hospitals, hotels and care environments, for carrying soiled laundry or waste.

## Description

The present invention relates generally to trolleys, and more specifically to trolleys for transporting laundry, linen, waste and other items. The invention is particularly suited for use in multiple residency locations such as hospitals, care homes, hotels and so on.

In premises such as hospitals, nursing homes, hotels and such like where many individuals reside there is a need to transport items such as clean or soiled laundry, towels and other domestic goods around the building. Trolleys are often used for this purpose.

A conventional trolley is constructed having a generally elongate, tubular-framed body comprising a base end and an opposing top (or mouth). A receptacle (such as a bag or box) is mounted at the mouth end such that the receptacle is suspended within the elongate body. The bag can be mounted on the body in a variety of ways, such as by snap-fit connection, or by hanging from hooks, use of velcro, or being otherwise tied/strapped to the mouth. Linen or other items are then placed into the bag for transportation.

The base of the elongate body is provided with wheels so that the trolley can be easily pushed or pulled around the building. A lid may be provided at the mouth end of the trolley. The bag is usually removable so that it may be cleaned or replaced. The trolley may be collapsible to facilitate transportation and storage of the trolley.

Such simple trolleys provide a relatively cheap means of moving numerous and/or bulky items around large residential premises.

However, in some situations there is a need to transport a large volume of goods. In other situations different types of goods need to be kept separate from each other (for example, clean linen kept separately from soiled linen). Therefore, a need arises for a trolley having the capacity or means for mounting two or more bags within the body.

This problem has been approached by simply providing a longer trolley consisting of two or more individual (i.e. single-bag trolleys of the type described above) which are conjoined during manufacture. For example, a double or triple capacity trolley can be made by welding two or three individual trolley bodies together.

However, due to the permanent nature of the connection, the larger trolley is not adaptable in the sense that the user cannot change the configuration or capacity of the trolley. The user must purchase the larger trolley in the required form (e.g. triple or double) and cannot change it after manufacture. Therefore, if the user purchases a double-bag trolley, it cannot be separated into two individual trolleys (or extended into a triple-bag trolley).

Therefore, this approach does not offer the user with the flexibility that is often required. Moreover, storage issues can arise with respect to trolleys which are of a form that is not currently required. Instead of being adapted to suit the user's current requirements, the redundant trolleys must be stored somewhere.

Thus, there is a need to provide a trolley which can be adapted in terms of the number of bags it can carry. More particularly, there is a need for a trolley which can be easily and temporarily attached to other trolleys such that the user can build a multi-bag trolley in a modular fashion using individual trolleys

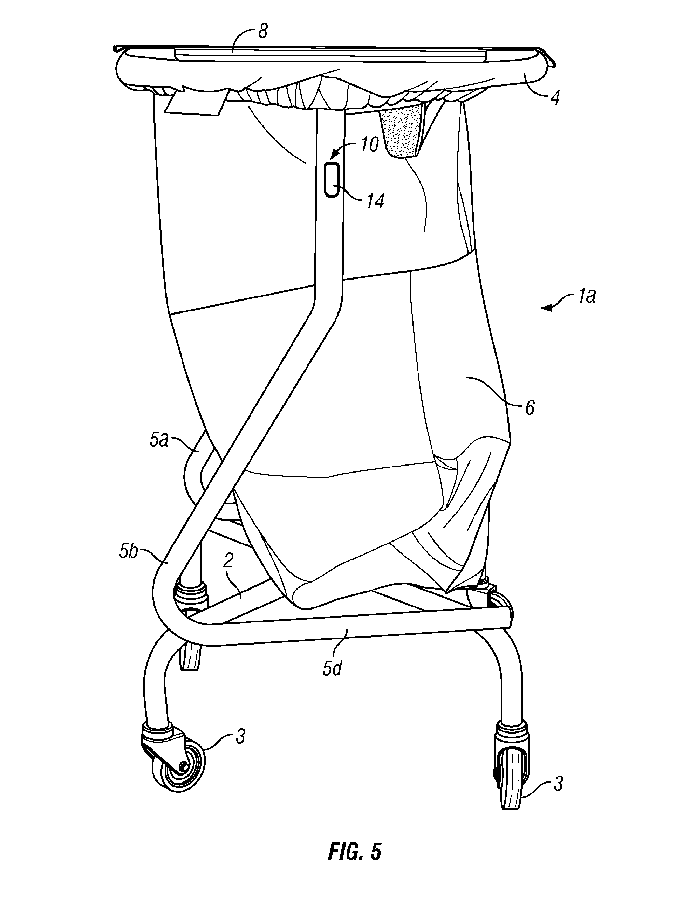

One proposed solution is disclosed in Canadian patent application number 478,647 (Haley). Haley discloses a collapsible bag holding cart and a cart-connecting device which can be used to form a sequence of two or more trolleys. The connector comprises rectangular rod pieces and upper/lower connecting brackets which are shaped to snap-fit onto the ends of two adjacent trolley frames. This is most clearly shown in Figures 5 and 6 of Haley.

However, the Haley connecting device can be dislodged if sufficient force is applied (e.g. by bumping or knocking of the cart during transportation, which is not uncommon). Thus, the snap-fit connection between the trolleys may not be adequately robust. Moreover, the rather complex shape and configuration of the connector, as seen in figure 5, may serve as a dirt trap and thus present a health risk in dirt-sensitive environments such as hospitals.

US 5,860,659FR 2914 264 and DE 8305946 U1 disclose connectable trolleys. The trolleys in these documents are connected via vertically aligned connection means provided at the middle of the trolley (i.e. between the opposing trolley sides, and between the wheels). As a result, these arrangements require the trolleys to be connected in a sequential fashion, one in front of the other, rather than side by side. This means that the connected trolleys form a relatively long chain extending in front of the user and can be difficult to manoeuvre around corners. Moreover, in order to account for this pivoting connection means are disclosed, which allow the trolleys to move relative to each other. However, this relative movement can also result in a trolley formation which is difficult for the user to control. It would be desirable to provide a trolley which can be connected to another trolley in such a way that relative movement of the trolleys is eliminated or at least minimised.

GB 2413311 discloses a stroller or pushchair for carrying a child. The stroller can be connected to another stroller using connection means 14 and 27. However, the stroller does not have a mouth from which a receptacle can be suspended and so it cannot serve as a trolley.

Therefore, there is a need for a modular trolley arrangement which provides a secure and robust connection, offers the user the desired flexibility in terms of configuration, whilst being simple to use, easy to clean and cheap to manufacture.

Such a solution has now been devised.

Thus, the invention provides a trolley according to the appended claims.

In a preferred embodiment of the invention, there is provided a trolley comprising:
an elongate body having a base, a mouth and at least two side members extending there between, the mouth being arranged and configured to carry a receptacle; and
first and second connection means provided on the same side of the trolley to facilitate connection of the trolley to a second trolley.

Preferably, each connection means is a bore. The bore may be a recess, or it may pass completely through the component on which it is provided.

At least one of the connection means may be a receiving member formed integrally within a side member. The receiving member may be a tube. Thus, the tube enables some element to be received within the side member to facilitate connection of the trolley to another trolley.

The first connection means may be spaced from the second connection means in the vertical plane.

The first connection means may be spaced from the second connection means in the horizontal plane.

Alternatively, the first and second connection means may be spaced from each other in both the vertical and horizontal planes.

By providing connection means towards both the front and back of the trolley, and/or towards the base and mouth, relative movement of the connected trolleys can be at least minimized.

At least one of the connection means may be substantially horizontally oriented, meaning that it may extend in the substantially horizontal plane.

The side members may comprise L-shaped tubular members.

The body may be formed as a tubular frame comprising one or more tubular members. The tubular member(s) may be metal.

The mouth of the trolley may be configured such that the receptacle can be suspended from the mouth. The receptacle may be a bag or box.

The first connection means may be provided at the front of the trolley towards the base. The second connection means may be provided at the back of the trolley towards the mouth,

One or both of the connection means may be a bore formed in a projecting element provided on a side member. It may be formed integrally with the body of the trolley or securely attached thereto (e.g. by welding or bolting the connection means to the body). The connection means may be a tube. The tube may be an elongate tube.

The bore may pass through the entire length of the projecting element to form a channel there through. Thus, the tube may be hollow throughout its entire length. Alternatively, the bore may extend only partially into the tube.

At least one of the connection means may be a bore having an internal thread for receiving a screw or other threaded attachment means. This may enable one portion (e.g. end) of a connecting element, such as a plate, to be secured against the trolley whilst another portion of the connecting element is secured against another trolley, thus connecting them. An aperture formed in the connector element may enable a screw or bolt to pass through the connector element into the connection means, thus holding it in place relative to the trolley.

The bore may be provided in the end of a tube. The tube may be a tubular frame element. The tube may be at or towards the base of the trolley. Additionally or alternatively, the tube may be at or towards the front of the trolley.

One of the connection means may be provided at or towards an upper part of the body. Thus, the connection means may be closer to the mouth than the base.

One of the connection means may be a tube for receiving a connector element. The connector element may be a brace or strut. The bore in the tube may be configured such that an arm of an inverted U-shaped brace can be inserted into the tube and retained therein by way of a relatively secure friction fit. The tube may be vertically or horizontally oriented.

Third and fourth connection means may provided on an opposing same side member in relation to the first and second connection means to facilitate connection of the trolley to a third trolley. In other words, a second pair of connection means may be provided on the other side of the trolley. Thus, the second pair of connection means enables the trolley to have a pair of trolleys attached to it, one on each side, to form a 'chain' of three trolleys. One or both of the attached trolleys may have connections means as described above to enable yet more trolleys to be added to an end of the 'chain'. In theory, the number of trolleys which can be added to the chain is unlimited, in accordance with the user's needs.

Wheels may be provided on the base of the trolley. Additionally or alternatively, a lid may be provided at the mouth. The lid may be connected to the mouth by a hinged arrangement.

The base and/or mouth of the trolley may be substantially square or substantially rectangular.

The base and/or mouth of the trolley may be substantially horizontal.

Also in accordance with the present invention there is provided a method of connecting a first trolley to a second trolley, wherein each trolley is a trolley as described above.

These and other aspects of the present invention will be apparent from and elucidated with reference to, the embodiment described herein.

An embodiment of the invention will now be described, by way of example only, and with reference to the accompanying drawings, in which:
Figure 1 shows first and second trolleys connected in accordance with the present invention.
Figure 2 shows the first and second trolleys of figure 1 from a different perspective.
Figure 3 shows the trolleys of Figures 1 and 2 from a side view.
Figure 4 shows the trolleys of figures 1 to 3 wherein a bag has been fitted to each of the trolleys.
Figure 5 shows a side view of a single trolley in accordance with the invention and having a bag and a lid.

A trolley in accordance with the present invention has means for connecting the trolley 1a to at least one other trolley 1b. Thus, the trolley 1a serves as a modular element for forming a chain of connected trolleys 1a, 1b.

This provides the advantage that the user can attach or disconnect individual trolleys in a modular fashion to suit the user's needs rather than having to purchase trolleys of a predetermined, fixed capacity.

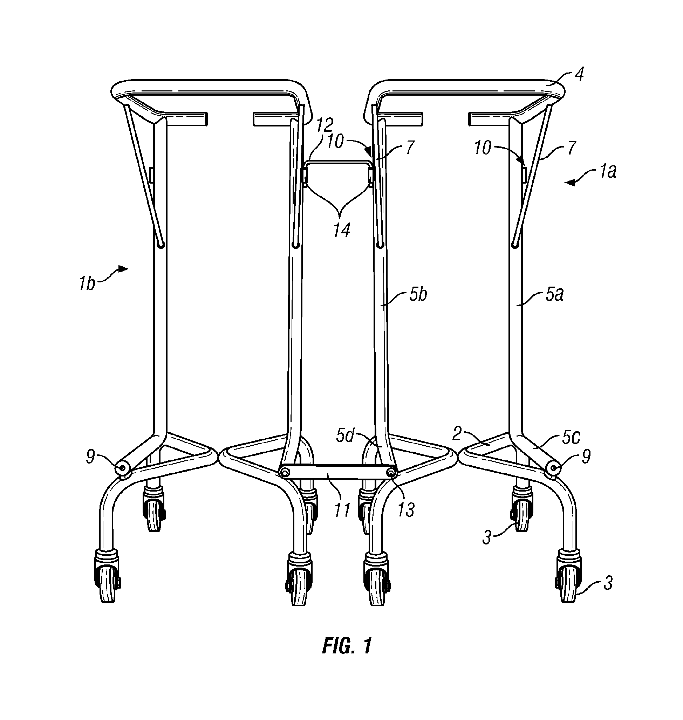

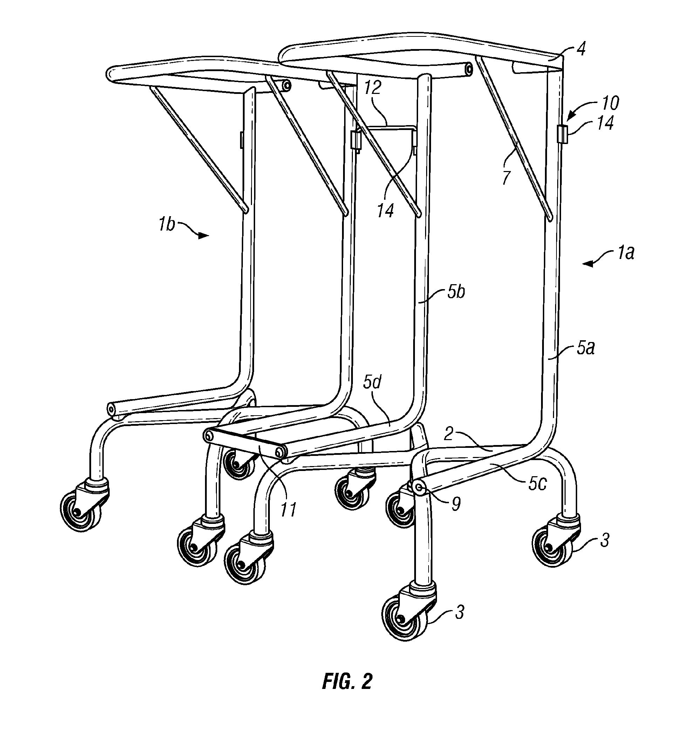

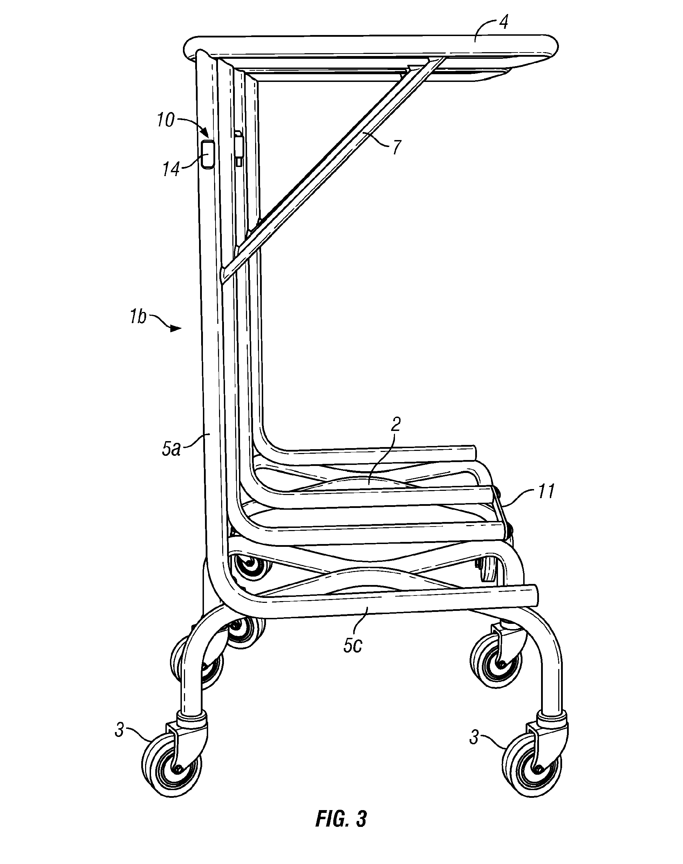

The illustrative trolley 1 of the present invention is similar to those known in the art. However, the form, dimension and/or configuration of the trolley body may differ according to various embodiments of the invention. The invention is not intended to be limited with respect to the configuration of the frame. Indeed, it should be noted that the design of the trolley shown in figure 5 differs from that shown in in Figures 1 to 3.

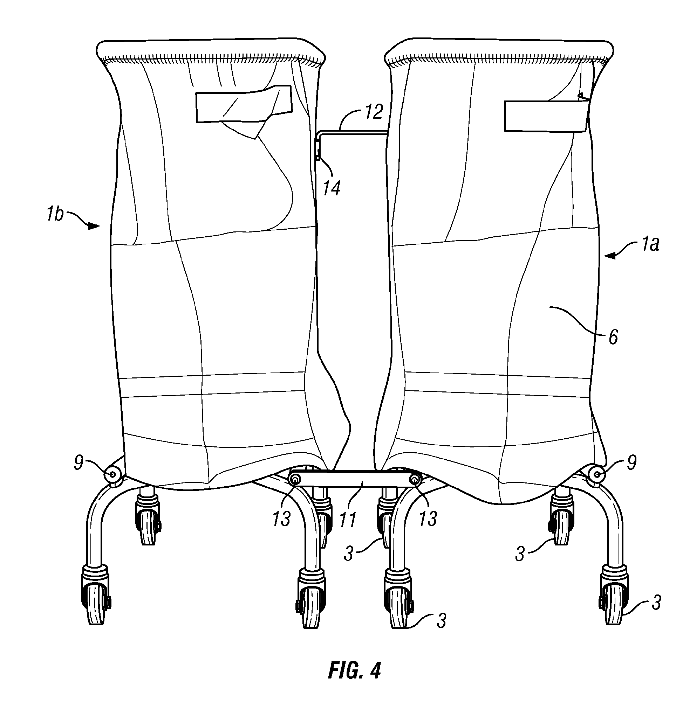

Turning to figures 1 to 4, the trolley 1a, 1b has a body formed from a tubular frame. The body is generally elongate, having a vertically-oriented longitudinal axis. The body has a base 2 (or lower) end extending substantially orthogonal to the longitudinal axis. Wheels 3 are attached to the base 2 so that the trolley 1 can be rolled along the ground during use.

At the other end of the body from the base 2 there is a rim or mouth 4 (or top) end formed from a tubular element which is substantially parallel to the base 2. Opposing L-shaped side members 5a, 5b extend from the base 2 to the mouth 4 to vertically space the base and mouth elements from each other and to form the area in which the bag 6 is located during use. The bottom (shorter) portion 5c, 5d of the L-shaped side member 5a, 5b is mounted on the base 2. The mouth 4 is supported by struts 7 which extend diagonally between the vertical side members 5a, 5b and the underside of the mouth 4 to provide additional support for the mouth element. The mouth 4, base 2 and side members 5a, 5b, 5c, 5d may be formed integrally or may be connected in any suitable fashion, such as by welding the components together. An openable/closeable lid 8 is shown attached at the mouth of the trolley in figure 5.

A trolley having a different design is shown in figure 5. Instead of the L-shaped side members 5a, 5b and strut 7, the upright portions 5a, 5b are kinked or angled such that the top of the side members 5a, 5b terminate at the middle of the side edges of the mouth 4. In this design, there is no need to support the mouth 4 with the strut 7. It should be noted that the invention is not intended to be limited in respect of such trolley design issues.

In use, the user suspends a bag 6 or other receptacle from the mouth 4 of the trolley such that it hangs downwardly within the trolley body, to receive and retain items such as linen, laundry, domestic items or waste.

In accordance with the invention, the body of the trolley is provided with a pair of connection means 9, 10 on at least one side (5a or 5b) of the body. Each connection means comprises a bore 9, 10 provided on the body of the trolley. Each bore is used to connect one portion of a respective connecting device 11, 12 to the trolley 1a, while another portion of the connecting device 11, 12 is connected to another adjacent trolley 1b by means of a corresponding bore 9, 10 provided thereon. Thus, the connecting devices 11, 12 form a pair of bridges which interconnect one trolley 1a to another trolley 1b.

In the illustrated embodiment, each trolley is provided with at least one pair of spaced apart bores 9, 10.

The first connection means is an aperture or bore 9 provided in a tube at or towards the base 2 of the trolley, and at or towards the front of the trolley. The tube is substantially horizontally oriented (i.e. substantially parallel with the ground or base of the trolley). In the illustrative embodiment, the bore 9 is provided at the end of the shorter portion 5d of L-shaped side member 5b as shown in Figure 1. The bore 9 is internally threaded such that it can receive a fastening means 13 such as a screw or bolt. In use, the screw 13 is fed through an aperture in one end of a rigid metal plate 11 to hold it against the trolley 1a in a secure fashion. Another aperture is formed at the other end of the plate 11 so that the plate can be screwed and fixed in place against the second trolley 1b in a similar fashion to form a robust connection.

The second connection means is a bore 10 provided higher up the trolley body than the first connection means. The second connection means 10 is closer to the mouth 4 of the trolley than the first connection means 9. Thus, the two bores 9, 10 are spaced apart from each other, with one bore being provided higher than the other. By providing one connection means towards the base and one towards the top of the trolleys, a more secure inter-connection of the trolleys is achieved. This connection is further enhanced by providing one connection means towards the front of the trolleys and one towards the back. Thus, the bores are spaced from each other in the vertical and horizontal planes.

The second bore 10 is substantially vertically oriented, and is formed within a tube-like retaining element 14 which projects from the trolley body. The retaining element 14 is an open ended tube carried vertically on the body. The bore in the retaining element 14 enables one end of a U-shaped connector 12 to be inserted into the retaining element. The connector 12 is a metal brace or strut. In use, the other end of the brace 12 can be inserted into a corresponding retaining element of the second trolley 1b to link trolleys 1a and 1b.

The retaining element 14 is provided vertically on the body such that the arms of the U-shaped connector are pushed down into the bores 10 of the retainers 14. This provides a secure connection between the trolleys as deliberate upward force is required to push the U-shaped connector up and out of the retainer 14, breaking the connection. Therefore, accidental banging or bumping of the trolleys or connector 12 will not be sufficient to dislodge it.

In the preferred embodiment the bore 10 passes through the entire retaining element 14 to form a channel there through. This provides the advantage that dirt cannot accumulate within retaining element 14 (which may occur if the bore extends only partially through the length of the retaining element).

Thus, the first and second connection means 9, 10 are provided in spaced apart relation, both in the vertical plane and the horizontal plane (as the first bore 9 is provided towards the base at the front of the trolley, and the second bore 10 is provided towards the mouth at the back of the trolley).

However, other configurations may be used without departing from the scope of the present invention. Similarly, other types or combinations of connecting means may be used and the invention is not intended to be limited in these regards. For example, the upper connection could be provided as a bore and rigid plate arrangement identical to that of the lower connection, rather than as a tube-like projection and U-shaped connector.

In a preferred embodiment, a pair of connection means is provided on each side member as shown in the figures. This enables a trolley 1a to be connected to a second trolley 1b on one side and a third trolley (not shown) on the other side by connecting the corresponding respective connection means. Thus, in theory, an infinite number of trolleys can be connected. Alternatively, if no more than two trolleys will need to be connected, only one pair of connection means may be provided on one side member of each trolley. In this case, a 'matching' pair of trolleys is required having connection means on their left/right sides respectively.

Therefore, the present invention provides the following advantages:
- It enables at least two trolleys to be connected so as to provide additional capacity over that of a single trolley;
- the connection means are simple and cheap to manufacture;
- trolleys can be connected and disconnected easily and quickly;
- the simplicity and nature of the connection means discourages dirt traps and the accumulation of unhygienic matter;
- the connection between the trolleys is robust and not easily broken by knocking, bumping or hitting either trolley;
- the connector devices 11, 12 are simple and cheap to manufacture and can be easily stored when not required for use;
- the use of connector means at the top and bottom, rear and front of the trolley provides a secure connection in which relative movement of the trolleys is minimised; in the prior art, the connection means are aligned and enable pivotal or rotational movement of the trolleys relative to each other, thus rendering them difficult to handle in their connected configuration.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. In a device claim enumerating several means, several of these means may be embodied by one and the same item of hardware. The mere fact that certain measures are recited in mutually different dependent claims does not indicate that a combination of these measures cannot be used to advantage.

## Claims

1. A trolley comprising:
an elongate body having a base, a mouth and at least two side members extending there between, the mouth being arranged and configured to carry a receptacle; and
first and second connection means provided on the same side of the trolley to facilitate connection of the trolley to a second trolley.

2. A trolley according to claim 1 wherein the first connection means is spaced from the second connection means in the vertical plane.

3. A trolley according to claim 1 or 2 wherein the first connection means is spaced from the second connection means in the horizontal plane.

4. A trolley according to claim 1 wherein the first and second connection means are spaced from each other in both the vertical and horizontal planes.

5. A trolley according to any preceding claim wherein each connection means is a bore.

6. A trolley according to any preceding claim wherein the first connection means is provided at the front of the trolley towards the base, and the second connection means is provided at the back of the trolley towards the mouth.

7. A trolley according to any preceding claim wherein one of the connection means is a bore formed in a projecting element provided on a side member, preferably wherein the bore passes through the entire length of the projecting element to form a channel there through.

8. A trolley according to any preceding claim wherein at least one of the connection means is a bore having an internal thread for receiving a screw or other threaded attachment means.

9. A trolley according to claim 8 wherein the bore is provided in the end of a tube, preferably wherein the tube is at or towards the base of the trolley.

10. A trolley according to claim 9 wherein the tube is at or towards the front of the trolley.

11. A trolley according to any preceding claim wherein one of the connection means is provided at or towards an upper part of the body.

12. A trolley according to any preceding claim wherein one of the connection means is a tube for receiving a connector element, preferably wherein the connector element is a brace or strut.

13. A trolley according to any preceding claim wherein:
i) third and fourth connection means are provided on an opposing same side member in relation to the first pair of connection means to facilitate connection of the trolley to a third trolley;
ii) the side members are L-shaped tubular members;
iii) wheels are provided on the base and/or a lid is provided at the mouth;
iv) the mouth and/or base is substantially square or substantially rectangular; and/or
v) at least one of the connection means is a tube formed integrally with a side member.

14. A trolley according to any preceding claim wherein at least one of the connection means is horizontally oriented.

15. A method of connecting a first trolley to a second trolley, wherein each trolley is a trolley in accordance with any preceding claim.
